# EUROPEAN PATENT SPECIFICATION

(11) **EP 1 426 791 B1**
(45) Date of publication and mention of the grant of the patent: **23.05.2007**
(21) Application number: 03257398.2
(22) Date of filing: 24.11.2003
(51) Int. Cl.: G02B 6/12, G02F 7/00, H03M 1/00

(54) **Photonic crystals and photonic analog-to-digital converters**
Photonische Kristalle und photonische Analog-Digital-Wandler
Cristaux photoniques et convertisseurs analogique-numérique photoniques

(30) Priority: 26.11.2002 US 304214
(43) Date of publication of application: 09.06.2004
(73) Proprietor: Soderberg, John Jesse, Acworth, Georgia 30101 (US)
(72) Inventor: Soderberg, John Jesse, Acworth, Georgia 30101 (US)
(74) Representative: Weston, Robert Dale

(56) References cited:
- EP-A- 1 548 467
- US-A- 6 160 504
- US-B1- 6 326 910
- YONEKURA J ET AL: "ANALYSIS OF FINITE 2-D PHOTONIC CRYSTALS OF COLUMNS AND LIGHTWAVE DEVICES USING THE SCATTERING MATRIX METHOD" August 1999 (1999-08), JOURNAL OF LIGHTWAVE TECHNOLOGY, IEEE. NEW YORK, US, PAGE(S) 1500-1501 , XP000919590 ISSN: 0733-8724 * page 1506, left-hand column, paragraph 1 * * figures 14b,15b,16 *
- C. MANOLATOU ET AL: "High-Density Integrated Optics" J. LIGHTWAVE TECH., vol. 17, no. 9, September 1999 (1999-09), pages 1682-1692, XP002303411
- BRZOZOWSKI L ET AL: "ALL-OPTICAL ANALOG-TO-DIGITAL CONVERTERS, HARDLIMITERS, AND LOGIC GATES" January 2001 (2001-01), JOURNAL OF LIGHTWAVE TECHNOLOGY, IEEE. NEW YORK, US, PAGE(S) 114-119 , XP001076520 ISSN: 0733-8724 * page 114, left-hand column, last paragraph * * page 116, left-hand column, paragraph 2 - page 117, right-hand column, last paragraph * * figures 4,6 *

## Description

### INTRODUCTION

The present invention relates generally to systems and methods for analog-to-digital conversion of photonic signals.

### BACKGROUND

An analog-to-digital converter is a ubiquitous component found in many different types of systems, such as but certainly not limited to computer, data, control, sensor, communication, and telecommunication systems. The analog-to-digital converters receive analog signals and provide a digital signal to another component, such as a processor. As the systems within which the analog-to-digital converters are used develop and become more sophisticated, the performance of the analog-to-digital converter is becoming more important.

For instance, as the development of a software defined radio continues, the need for high-speed analog to digital conversion to directly digitize RF to microwave signals rather than to downconverting the signal to IF becomes necessary to improve performance, to simplify design, to reduce noise, to reduce interference, and to reduce cost. The current technology of analog to digital conversion is primarily done at the electronic signal. The high speed sampling of the electronic signal has been limited to the stability of the clock jitter, thermal noise of the electronics, electromagnetic interference of other electronic devices and circuits, cross-talk, and coupling noises of interconnect lines.

The use of an optical signal has benefited many high speed communication applications due to the inherent inertness of the optical signals to the EMI noise and minimal cross-talk and coupling to close by devices. Optical signals can also travel relatively long distances without compromising severe signal distortion and attenuation at high modulation speed.

To obtain even better performance, some work has been done in performing the analog-to-digital conversion in the optical domain. a photonic analog-to-digital converter can take advantage of the high speed analog signal of the optical domain and convert it to a high speed digital signal in the electronic domain for further signal processing. The photonic analog-to-digital converter can therefore achieve high speed analog to digital conversion beyond today's technology. The photonic analog-to-digital converter can provide a system with the low noise, low distortion, and high-speed characteristic of photonics while leveraging the more established high-speed digital electronics for low cost signal processing. The digital signal is also less sensitive to noise and can be processed using today's semiconductor technology at relatively high speed.

### PRIOR ART

Document - US-B-6,326,910 (HAYDUK et al) discloses:-
an apparatus and method for high-speed analog-to-digital conversion employs photonic circuits with variable light-absorption. A coherent light source is clocked to produce a stream of coherent light pulses onto which is modulated an analog signal to be converted to digital form. An optical splitter divides the stream of pulses into a number of streams that is proportional to the resolution sought. A passive photonic quantizer absorbs, to a predetermined degree, the light energy of the incident pulse streams. The output of a fully absorbed pulse does not trigger a comparator. Pulse streams of sufficient intensity pass through the light absorbers, and their output does trigger the comparator. The output state of the comparators may bye read into a digital memory to form a digital word that represents the analog signal during any discrete clock interval. Most of the elements of the apparatus can be fabricated on a substrate of photonic semiconducting material.

Document - Journal of Lightwave Technology Vol.17 pp1500-1508 - September 1999 "Analysis of Finite 2-D Photonic Crystals. of Columns and Lightwave Devices Using the Scattering Matrix Method" (JUN YONEKURA, MITSUTAKA IKEDA, AND TOSHIHIKO) discloses:-
calculation models of photonic crystals acting as waveguides with 60° bends and Y-branch and directional couplers [Fig. 14]

Document - Journal Of Lightwave Technology, Vol. 17, No. 9, September 1999 "High-Density Integrated Optics" (C. MANOLATOU, STEVEN G. JOHNSON, SHANHUI FAN, PIERRE R. VILLENEUVE, H. A. HAUS, AND J. D. JOANNOPOULOS) discloses:-
two-dimensional (2-D) finite difference time domain (FDTD) simulations of low-loss right angle waveguide bends, T-junctions and crossings, based on high index-contrast waveguides. Such structures are essential for the dense integration of optical components. Excellent performance characteristics are obtained by designing the waveguide intersection regions as low-Q resonant cavities with certain symmetries and small radiation loss. A simple analysis, based on coupled mode theory in time, is used to explain the operation principles and agrees qualitatively with the numerical results.

Document - US-B- 6,160,504 (FIELDS et al). December 12, 2000 discloses:-
An optical quantizer (10) that employs a chain of optical thresholding devices (16) positioned in the propagation path of an optical input beam (12) to be quantized. Each optical thresholding device (16) saturates and turns transparent if the intensity of the optical beam (12) that impinges it is above a predetermined threshold level designed into the device (16). If the input beam (12) saturates the optical thresholding device (16), the device (16) outputs an indicator signal (22) identifying the saturation. The input beam (12) propagates through the optical thresholding device (16) with some attenuation caused by the saturation, and impinges subsequent optical thresholding devices (16) in the chain. Eventually, the attenuation of the input beam (12) caused by the multiple saturations will decrease the beam intensity below the threshold level of the next optical thresholding device (16). The number of indicator signals (22) gives an indication of the intensity of the input beam (12). The optical thresholding devices (16) can provide optical or electrical indicator signals (22) depending on the type of thresholding device (16) used."

Document Journal Of Lightwave Technology, Vol. 19, No. 1, January 2001 "All-Optical Analog-to-Digital Converters, Hardlimiters, and Logic Gates" (LUKASZ BRZOZOWSKI AND EDWARD H. (TED) SARGENT) proposes and analyzes:-
the optical signal processing functionality of periodic structures consisting of alternating layers of materials possessing different Kerr nonlinearities. They explore structure-materials-performance relationships in all-optical analog-to-digital converters, hardlimiters, and AND and OR gates. They show that their proposed analog-to-digital converters can extract a binary word from multilevel optical signals in a single bit interval. They also propose a family of optical limiters whose output signal clamps to a set upper logic level for any input value exceeding a chosen threshold. They explore the performance of an all-optical logic gate whose forward-directed output implements a binary AND and whose backward-directed output implements an OR function.

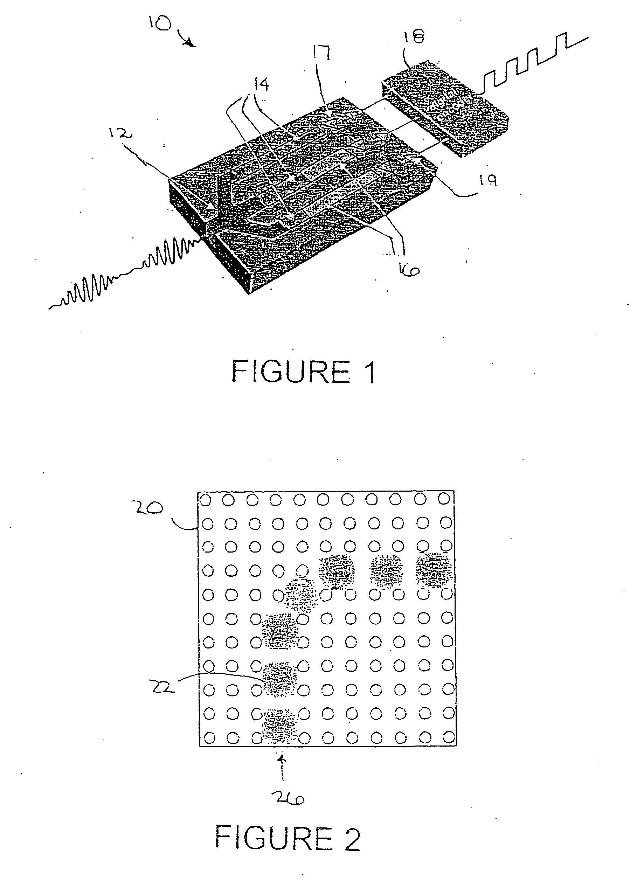

Figure 1 illustrates an example of a photonic analog-to-digital converter 10 using a conventional optical splitter 12, saturable absorbers 14, optical delay lines 16, photo-diode detectors 17 and electronic comparators 19. With this analog-to-digital converter, incoming photonic signals are split into a plurality of photonic components and directed toward the saturable absorbers 14. The saturable absorbers 14 quantize the photonic signal by preventing any signal from reaching the photo-diode detectors 17 unless the photonic components exceed a certain threshold level. The comparators 19 then digitize the output by comparing the output of the photo-diode detectors 17 to a reference level for the digital signal. A digital encoder 18 combines the individual bits from the comparators to form a digital signal.

A problem with this approach is that the use of conventional optical waveguides 16 and/or fiber splitter 12 makes it difficult to miniaturize the analog-to-digital converter 10. This is due to the minimum-bending radius allowed in order to minimize the scattering losses at the bends of the waveguides 16 and splitter 12. Secondly, the use of saturable absorbers 14 to quantize the optical signal creates a highly inefficient conversion. Most of the original optical signal will be wasted through absorption. As number of optical split channels required for the number of digital bit resolution is channels = 2ⁿ bits, the device 10 quickly becomes impractical to implement.

### OBJECT

An object of the present invention is to address the above-described problems by providing a more efficient system and method for analog-to-digital conversion of photonic signals.

### STATEMENT OF INVENTION

According to the present invention, a photonic analog-to-digital converter according to claim 1 has an optical splitter; optical detectors; a digital encoder and a photonic crystal having a periodic structure that forms a plurality of optical splitters for dividing an incoming photonic signal into successively smaller photonic component signals, each of which represents a different bit within an output digital signal; and waveguides for routing the photonic signal to the optical splitter, for routing photonic component signals to the optical detectors and designed to provide a uniform delay for all photonic component signals.

According to a first embodiment of the present invention the periodic structure of the photonic crystal forms a first splitter to receive the incoming photonic signal and separate it into equal first and second photonic component signals and a second splitter to receive one of the first and second photonic component signals from the first splitter and separate it into equal third photonic and fourth photonic component signals.

Also according to the present invention as defined by claim 9, a photonic crystal for use in a photonic analog-to-digital converter has a periodic structure that forms a plurality of optical splitters for dividing an input photonic signal into successively smaller photonic component signals and waveguides for routing the photonic signal to the optical splitter, for routing photonic component signals to the optical detectors and designed to provide a uniform delay for all photonic component signals

Further embodiments of the present invention are set forth in the appended claims.

Because the analog-to-digital conversion is performed optically, the analog-to-digital converter can operate at much higher speeds and is much less susceptible to EMI, cross-talk, and noise. Also, since the routing and splitting of the photonic signals is performed within the crystal and not with conventional fiber waveguides and/or splitters, the analog-to-digital converter can be manufactured much smaller and can more easily accommodate higher numbers of bits. The analog-to-digital converters according to the invention therefore offer a more beneficial and practical solution to analog-to-digital conversion and with improved overall performance.

The above and further features of the present invention are illustrated by way of example in the following description and drawings.

### BRIEF DESCRIPTION OF DRAWINGS

Figure 1 is a diagram of a conventional photonic analog-to-digital converter using saturable absorbers;
Figure 2 is an example of a waveguide using a crystal according to an embodiment of the invention;
Figure 3 is an example of a splitter using a crystal according to an embodiment of the invention;
Figures 4(A), (B), and (C) are examples of different periodic pattern structures for photonic crystals;
Figure 5 is a diagram of a photonic analog-to-digital converter according to an embodiment of the invention;
Figure 6 is a diagram of an optical limiter structure using alternating dielectric and optical Kerr coefficients; and
Figure 7 is a diagram of a photonic analog-to-digital converter according to another embodiment of the invention using an optical limiter.

### DETAILED DESCRIPTION

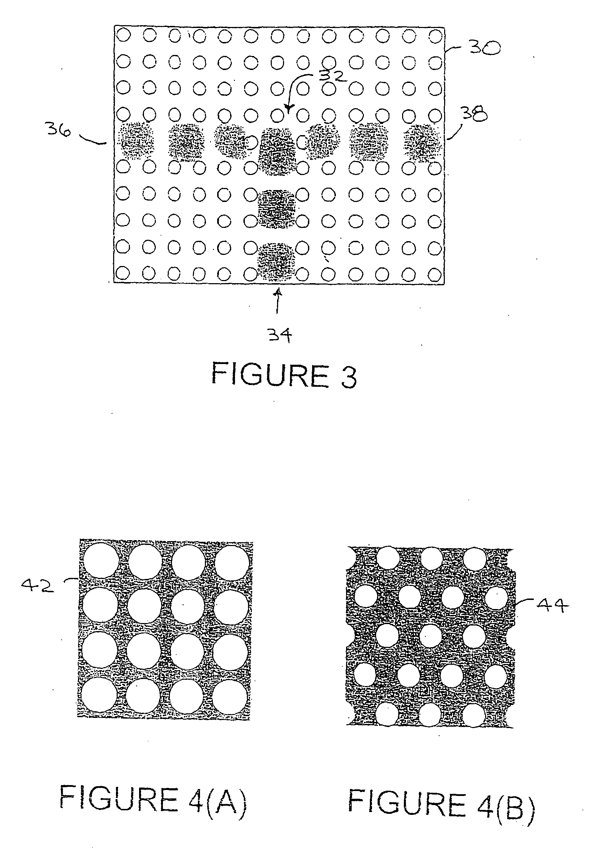

In recent years, a photonic crystal has been studied for creating optical waveguides. Unlike conventional index confined waveguides, photonic crystals guide the optical waves by prohibiting certain energy states within certain frequency ranges to exist within the periodic structure. As a result, the electromagnetic waves can be guided through tight bends without any significant scattering losses. Figure 2 is a diagram that represents the path 26 of travel of a photonic signal 22 through a crystal 20. The photonic crystal 20 enables smaller optical devices to be interconnected than can be achieved through conventional optical waveguides and/or fibers. Figure 3 is a diagram of a photonic crystal 30 that forms a splitter 32 for separating an incoming photonic signal 34 into two photonic components 36 and 38. The photonic crystal 30 has the ability to create a highly efficient optical splitter 32 close to 100% transmission over a certain frequency range.

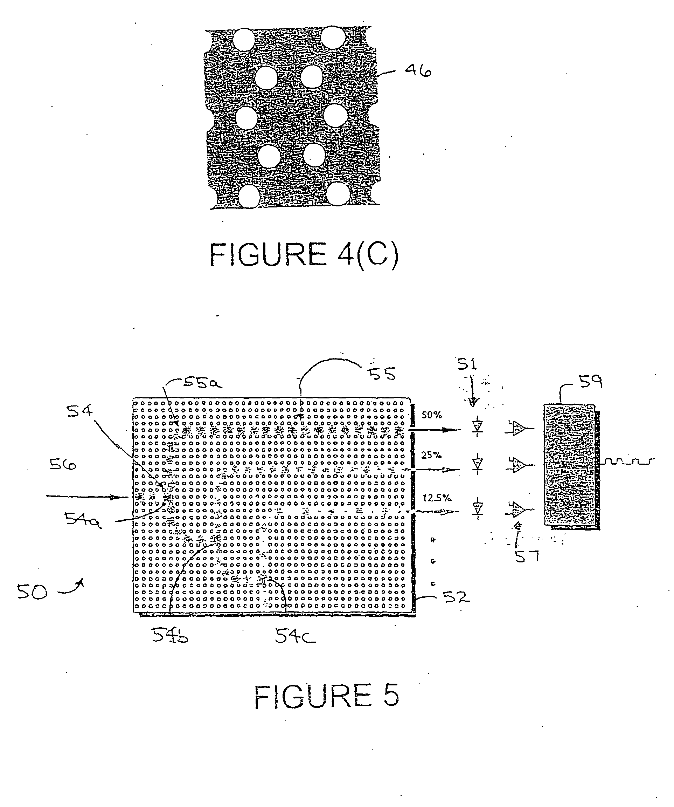

The photonic crystals according to the invention have periodic dielectric structures that contain materials with alternating different dielectric constants. As shown in Figures 4(A) to 4(C), the periodic structures can form square 42, triangular 44, honeycomb 46, or other patterns for creating a photonic band-gap used in confining electromagnetic waves within the localized defect region. Additional information on photonic crystals may be found in M. Loncar et al., Applied Physics Letters, Vol. 77, No. 13, September 25, 2000, and M. Bayindir et al., Applied Physics Letters, Vol. 77, No. 24, December 11, 2000.

An optical signal quantizer 50 will now be described with reference to Figure 5. The quantizer 50 has a photonic crystal 52 which defines a highly efficient optical splitter 54 and optical waveguide 55 bends at sub-micron radii. The quantizer 50 includes a plurality of optical splitters 54a to 54c for successively splitting an incoming photonic signal 56 into smaller quantized photonic signals. In this example, each optical splitter 54 separates a photonic signal into two equal quantized photonic signals. It should be understood that in other embodiment of the invention, the splitters 54 could separate a photonic signal into more than two quantized photonic signals and/or may separate a photonic signal into unequal quantized photonic signals. With reference to Figure 5, the incoming photonic signal is separated into two photonic signals quantized at 50% for each signal. The second optical splitter 54b receives one of the 50% quantized photonic signal and divides the signal in half to form two 25% quantized photonic signals. Finally, the third optical splitter 54c receives one of the 25% quantized signals and forms two 12.5% quantized optical signals.

The outputs from the optical splitters 54 are routed through waveguides 55 to optical detectors 51. The waveguides 55 are designed to provide a uniform delay for all quantized photonic signals. Thus, each quantized photonic signal of the incoming photonic signal will reach the optical detectors 51 at the same time. The waveguides 55 include turns, such as 90 degree turns 55a, which may be provided with practically no losses. The quantized photonic signals are then converted into electrical signals by the optical detectors 51. A set of comparators 57 set threshold levels for the digital signals and provide outputs in digital form. The outputs from the comparators 57 form individual bits of the digital signal which are combined together through digital encoder 59. Thus, with the quantizer 50, the photonic crystal 52 quantizes the incoming photonic signal 56 into quantized photonic signals by successively splitting the photonic signal. With the high-speed photodiode detectors 51, comparators 57, and the digital encoder 59, the quantizer 50 can provide a high-speed optical analog to digital converter.

In the embodiment shown in Figure 5, the analog signals from the optical detectors 51 are input to the comparators 57 in order to form the digital bits of a digital signal. With this embodiment, the analog electrical signals are compared to threshold levels set by the comparators 57. According to another aspect of the invention, the quantized photonic signals are compared to threshold intensity levels, thereby resulting in an even faster conversion speed. The comparison of the quantized photonic signals can be performed in a number of ways, such as through the use of an optical limiter. According to this aspect, a photonic crystal quantizes photonic signals and routes the quantized signals directly to the optical limiter. The output of the optical limiter is provided to photodiodes and then to a digital encoder. This approach eliminates any analog signal in the electrical domain. The use of a non-linear distributed feedback structure as an optical limiter can remove the use of the electronic comparators 57 in the photonic analog-to-digital system 50 of Figure 5. Additional information on optical limiters may be found in L. Brzozowski et al., IEEE Journal of Quantum Electronics, Vol. 36, No. 5, May 2000.

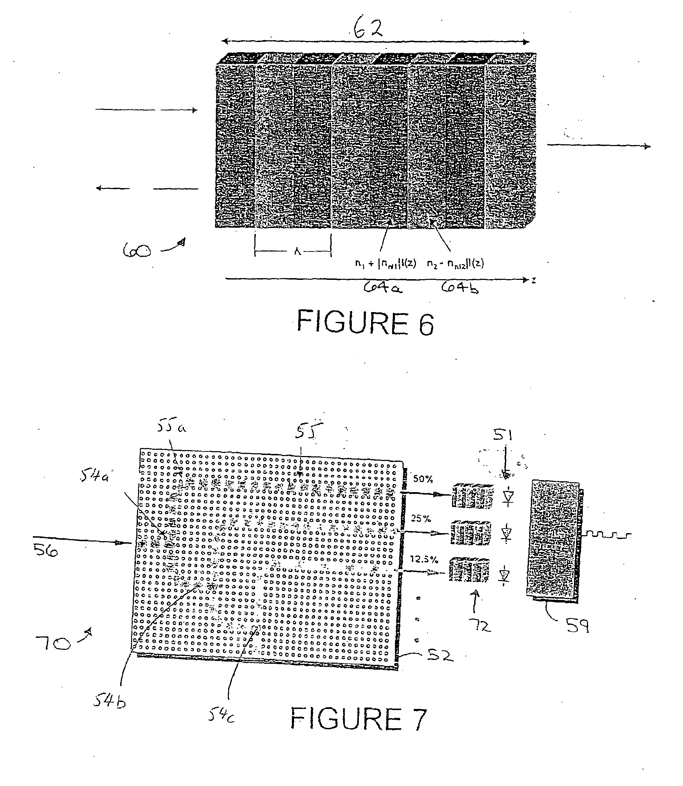

An example of an optical limiter 60 will now be described with reference to Figure 6. The optical limiter 60 is comprised of a one-dimensional periodic structure 62 with alternating dielectric constants 64a and 64b which possess alternating positive and negative non-linear Kerr coefficients This structure can provide an optical hard-limited effect that prevents light transmission up to certain intensity level and quickly switches to a fixed limit of output transmission after the certain intensity threshold is reached. The threshold can be determined by the selection of the alternating material dielectrics and their corresponding Kerr coefficients. The thresholds for the optical limiters may be set to the same value or to different values. The wavelength λ of operation can be tuned by changing the layer thickness and spacing. The shape quality of the optical signal response curve can be determined by the number of alternating layers.

Figure 7 is a diagram of a quantizer 70 according to another embodiment of the invention. The quantizer 70 includes the photonic crystal 52 which receives the incoming photonic signal 56 and forms quantized photonic signals. The quantized photonic signals are passed through optical limiters 72 which block the quantized photonic signal if it is less than a set threshold intensity level or passes the quantized photonic signal if it meets or exceeds the threshold intensity level. The set of optical detectors 51 receives the outputs from the optical limiters 72 and outputs from the detectors 51 form the individual bits of a digital signal. The digital encoder 59 forms the digital signal from the individual bits.

## Claims

1. A photonic analog-to-digital converter having:-
i) an optical splitter (30,52);
ii) optical detectors (51);
iii) a digital encoder (59);
wherein:-
iv) a photonic crystal (52) has a periodic structure that forms:-
(a) a plurality of optical splitters (54a-c) for dividing an incoming photonic signal (56) into smaller photonic component signals, each of which represents a different bit within an output digital signal; and
(b) waveguides (55) for routing the photonic signal to the optical splitter and also for routing photonic component signals to the optical detectors;
v) the optical detectors (51) are each operative to receive and convert one of said photonic component signals into an electrical signal; and
vi) the digital encoder (59) is operatively connected to the optical detectors to receive the electrical signals and form the output digital signal.
**characterized in that**:-
iv) a photonic crystal (52) has a periodic structure that forms:-
(a) the plurality of optical splitters (54a-c) divide the incoming photonic signal (56) into successively smaller photonic component signals; and
(b) the waveguides (55) are designed to provide a uniform delay for all photonic component signals.

2. A converter as claimed in claim 1, wherein the waveguides (55) include turns (55a).

3. A converter as claimed in claim 1 or claim 2, wherein the periodic structure of the photonic crystal (52) forms:-
i) a first splitter (54a) to receive the incoming photonic signal (56) and separate it into equal (50%) first and second photonic component signals;
and,
ii) a second splitter (54b) to receive one of said (50%) first and second photonic component signal from the first splitter and separate it into equal third and fourth (25%) photonic component signals.

4. A converter as claimed in claim 3, wherein the periodic structure within the photonic crystal (52) forms a third splitter (54b) to receive one of said (25%) third and fourth photonic component signal from the second splitter (54b) and separate it into equal fifth and sixth (12.5%) photonic component signals.

5. A converter as claimed in any of claims 1 to 4, wherein comparators (57) are coupled between optical detectors (51) and the digital encoder (59) and each comparator generates an individual bit if an input electrical signal exceeds a set threshold level.

6. A converter as claimed in any of claims 1 to 5, wherein optical limiters (72) are coupled between the photonic crystal (52) and optical detectors (51), each limiter being operative to block the photonic component signal if it is less than a set threshold intensity level or pass the photonic component signal if it meets or exceeds the threshold intensity level.

7. A converter as claimed in claim 6, wherein:-
i) the optical detectors (51) receive the outputs from the optical limiters (72);
ii) the outputs from the detectors form the individual bits of the output digital signal; and,
iii) the digital encoder (59) forms the output digital signal from the individual bits.

8. A converter as claimed in claim 7, wherein the optical limiter (60, 72) comprises a one-dimensional periodic structure (62) with alternating dielectric constants (64a) and (64b) which possess alternating positive and negative non-linear Kerr coefficients.

9. A photonic crystal for use in a photonic analog-to-digital converter having a periodic structure that forms:-
(a) a plurality of optical splitters (54a-c) for dividing an incoming photonic signal (56) into smaller photonic component signals; and
(b) waveguides (55) for routing photonic signals to, between and from the optical splitters;
**characterised in that:-**
(c) the plurality of optical splitters (54a-c) divide the incoming photonic signal (56) into successively smaller photonic component signals; and
(d) the waveguides (55) are designed to provide a uniform delay for all photonic component signals.

10. A method of converting an analog photonic signal to a digital signal using a photonic analog-to-digital converter as claimed in any of claims 1 to 8 or a photonic crystal as claimed in claim 9.

## Patentansprüche

1. Photonischer Analog-/Digital-Wandler mit:
I) einem optischen Splitter (30; 52);
II) optischen Detektoren (51);
III) einem digitalen Codierer (59;
bei dem:
IV) ein photonischer Kristall eine periodische Struktur hat, die bildet:
(a) eine Mehrzahl optische Splitter (54a bis c) zum Teilen eines photonischen Eingangssignals (56) in photonische Signale mit kleineren Komponenten, von denen eine jede ein unterschiedliches Bit in einem digitalen Ausgangssignal repräsentiert; und
(b) Wellenleiter (55) zum Leiten des photonischen Signals zu den optischen Splittern sowie zum Leiten der photonischen Signalkomponenten zu den optischen Detektoren;
V) jeder der optischen Detektoren (51) aktiviert ist, um eine der photonischen Signalkomponenten in ein elektrisches Signal zu wandeln; und
VI) der digitale Codierer (59) funktional mit den optischen Detektoren verbunden ist, um die elektrischen Signale zu empfangen und das digitale Ausgangssignal zu bilden,
**dadurch gekennzeichnet, dass**
VII) der photonische Kristall (52) eine periodische Struktur hat, die bildet:
(a) die Mehrzahl optischer Splitter (54a bis c) die photonischen Eingangssignale (56) in aufeinander folgende photonische Signale mit kleineren Komponenten teilt; und
(b) die Wellenleiter (55) so ausgelegt sind, dass sie für alle photonischen Signalkomponenten die gleichmäßige Verzögerung bereitstellen.

2. Wandler nach Anspruch 1, bei dem die Wellenleiter (55) Umlenkungen (55a) enthalten.

3. Wandler nach Anspruch 1 oder 2, bei dem die periodische Struktur des photonischen Kristalls (52) bildet:
I) einen ersten Splitter (54a) zum Empfangen des photonischen Eingangssignals (56) und Trennen desselben in gleiche (50%) erste und zweite photonische Signalkomponenten; und
II) einen zweiten Splitter (54b) zum Empfangen der ersten oder zweiten (50%) photonischen Signalkomponenten vom ersten Splitter und Trennen in gleiche (25%) dritte und vierte photonische Signalkomponenten.

4. Wandler nach Anspruch 3, bei dem die periodische Struktur im photonischen Kristall (52) einen dritten Splitter (54c) zum Empfangen der dritten oder vierten (25%) Signalkomponente vom zweiten Splitter (54b) und Trennen in gleiche (12,5%) fünfte und sechste photonische Signalkomponenten bildet.

5. Wandler nach einem der Ansprüche 1 bis 4, bei dem Komparatoren (57) zwischen den optischen Detektoren (51) und dem digitalen Codierer (59) gekoppelt sind, und jeder Komparator ein individuelles Bit erzeugt, wenn ein elektrisches Eingangssignal einen eingestellten Schwellenwert überschreitet.

6. Wandler nach einem der Ansprüche 1 bis 5, bei dem optische Begrenzer (72) zwischen dem photonische Kristall (52) und den optischen Detektoren (51) gekoppelt sind, wobei jeder Begrenzer aktiviert ist, um die photonische Signalkomponente zu sperren, wenn die photonische Signalkomponente schwächer ist als ein eingestellter Intensitätsschwellenpegel, und die photonische Signalkomponente durchzulassen, wenn sie dem Intensitätsschwellenpegel entspricht oder ihn überschreitet.

7. Wandler nach Anspruch 6, bei dem:
I) die optischen Detektoren (51) die Ausgänge von den optischen Begrenzern (72) empfangen;
II) die Ausgänge von den Detektoren die individuellen Bits der digitalen Ausgangssignale bilden; und
III) der digitale Codierer (59) das digitale Ausgangssignal aus den individuellen Bits bildet.

8. Wandler nach Anspruch 7, bei dem der optische Begrenzer (60; 72) eine eindimensionale periodische Struktur (62) mit alternierenden Dielektrizitätskonstanten (64a und 64b) aufweist, die alternierende positive und negative nicht lineare Kerr-Koeffizienten haben.

9. Photonischer Kristall zur Verwendung in einem photonischen Analog-/Digital Wandler mit einer periodischen Struktur, die bildet:
(a) eine Mehrzahl optischer Splitter (54a bis c) zum Teilen eines photonischen Eingangssignals (56) in photonische Signale mit kleineren Komponenten; und
(b) Wellenleiter (55) zum Leiten der photonischen Signale zu den optischen Splittern sowie zum Leiten der photonischen Signalkomponenten zu den, zwischen den und von den optischen Splittern;
**dadurch gekennzeichnet, dass**:
(c) die Mehrzahl optischer Splitter (54a bis c) die photonischen Eingangssignale (56) in aufeinander folgende photonische Signale mit kleineren Komponenten teilt; und
(d) die Wellenleiter (55) so ausgelegt sind, dass sie für alle photonischen Signalkomponenten die gleiche Verzögerung bereitstellen.

10. Verfahren zum Wandeln eines analogen photonischen Signals in ein digitales Signal unter Verwendung eines photonischen Analog-/Digital-Wandlers nach einem der Ansprüche 1 bis 8 oder eines photonischen Kristalls nach Anspruch 9.

## Revendications

1. Convertisseur analogique-numérique photonique ayant :
i) un diviseur optique (30, 52) ;
ii) des détecteurs optiques (51) ;
iii) un codeur numérique (59);
dans lequel :
iv) un cristal photonique (52) a une structure périodique qui forme :
(a) une pluralité de diviseurs optiques (54a-c) pour diviser un signal photonique entrant (56) en signaux composants photoniques plus petits, dont chacun représente un bit différent dans un signal numérique de sortie ; et
(b) des guides d'onde (55) pour acheminer le signal photonique au diviseur optique et aussi pour acheminer des signaux composants photoniques à des détecteurs optiques ;
v) les détecteurs optiques (51) sont chacun opérationnel pour recevoir et convertir un desdits signaux composants photoniques en un signal électrique ; et
vi) le codeur numérique (59) est connecté opérationnellement aux détecteurs optiques pour recevoir les signaux électriques et former le signal numérique de sortie ;
**caractérisé en ce que** :
iv) un cristal photonique (52) a une structure périodique qui forme :
(a) la pluralité de diviseurs optiques (54a-c) divisent le signal photonique entrant (56) en signaux composants photoniques successivement plus petits ; et
(b) les guides d'onde (55) sont conçus pour fournir un délai uniforme pour tous les signaux composants photoniques.

2. Convertisseur selon la revendication 1, dans lequel les guides d'onde (55) comprennent des tours (55a).

3. Convertisseur selon la revendication 1 ou la revendication 2, dans lequel la structure périodique du cristal photonique (52) forme :
i) un premier diviseur (54a) pour recevoir le signal photonique entrant (56) et le séparer en premier et deuxième signaux composants photoniques égaux (50 %); et
ii) un deuxième diviseur (54b) pour recevoir un desdits premier et deuxième signaux composants photoniques égaux (50 %) du premier diviseur et le séparer en troisième et quatrième signaux composants photoniques égaux (25 %).

4. Convertisseur selon la revendication 3, dans lequel la structure périodique dans le cristal photonique (52) forme un troisième diviseur (54b) pour recevoir un desdits troisième et quatrième signaux composants photoniques (25 %) du deuxième diviseur (54b) et le séparer en cinquième et sixième signaux composants photoniques égaux (12,5 %).

5. Convertisseur selon l'une quelconque des revendications 1 à 4, dans lequel des comparateurs (57) sont couplés entre des détecteurs optiques (51) et le codeur numérique (59) et chaque comparateur génère un bit individuel si un signal électrique d'entrée dépasse un niveau de seuil réglé.

6. Convertisseur selon l'une quelconque des revendications 1 à 5, dans lequel des limiteurs optiques (72) sont couplés entre le cristal photonique (52) et des détecteurs optiques (51), chaque limiteur étant opérationnel pour bloquer le signal composant photonique s'il est inférieur à un niveau d'intensité de seuil réglé ou pour laisser passer le signal composant photonique s'il atteint ou dépasse le niveau d'intensité de seuil.

7. Convertisseur selon la revendication 6, dans lequel :
i) les détecteurs optiques (51) reçoivent les sorties des limiteurs optiques (72) ;
ii) les sorties des détecteurs forment les bits individuels du signal numérique de sortie ; et
iii) le codeur numérique (59) forme le signal numérique de sortie à partir des bits individuels.

8. Convertisseur selon la revendication 7, dans lequel le limiteur optique (60, 72) comprend une structure périodique unidimensionnelle (62) avec des constantes diélectriques alternées (64a) et (64b) qui possèdent des coefficients de Kerr non linéaires positifs et négatifs alternés.

9. Cristal photonique à utiliser dans un convertisseur analogique-numérique photonique ayant une structure périodique qui forme :
(a) une pluralité de diviseurs optiques (54a-c) pour diviser un signal photonique entrant (56) en signaux composants photoniques plus petits ; et
(b) des guides d'onde (55) pour acheminer les signaux photoniques à des diviseurs optiques, entre des diviseurs optiques et à partir des diviseurs optiques ;
**caractérisé en ce que** :
(c) la pluralité de diviseurs optiques (54a-c) divisent le signal photonique entrant (56) en signaux composants photoniques successivement plus petits ; et
(d) les guides d'onde (55) sont conçus pour fournir un délai uniforme pour tous les signaux composants photoniques.

10. Procédé pour convertir un signal photonique analogique en un signal numérique en utilisant un convertisseur analogique-numérique photonique selon l'une quelconque des revendications 1 à 8 ou un cristal photonique selon la revendication 9.
